# EUROPEAN PATENT APPLICATION

(11) **EP 3 444 216 A1**
(43) Date of publication of application: **20.02.2019**
(21) Application number: 17186183.4
(22) Date of filing: 14.08.2017
(51) Int. Cl.: B66B 9/02, B66B 7/12

(54) **AN ELEVATOR SPINDLE SYSTEM LUBRICATION DEVICE**

(71) Applicant: thyssenkrupp Home Solutions S.r.l., 56121 Pisa (IT); thyssenkrupp AG, 45143 Essen (DE)
(72) Inventor: Sbrana, Fabio, 56023 Cascina Pisa (IT)
(74) Representative: thyssenkrupp Intellectual Property GmbH

(57) **Abstract**

The present invention refers to a lubrication device (100) for an elevator spindle system having a spindle (2), comprising:
a) at least one lubricant container (3, 5, 17, 22) for storing a lubricant (3a);
b) a dispenser (4) to dispense the lubricant (3a) to the spindle system;
c) a collector (12) for collecting lubricant which has travelled from the dispenser (4) along the spindle system;
(d) a fluid conduct (16) adapted to transport the collected lubricant (3a) from the collector (12) to the dispenser (4); and
(e) a valve (24) adapted to control the flow of lubricant (3a) from the at least one lubricant container (3, 5, 17, 22) to the dispenser (4).

## Description

The invention refers to a spindle system in home elevator and platform lift units. In particular, it refers to an elevator spindle system lubrication device; and a method of lubricating a spindle system within an elevator unit using said device.

DE 10 2005 055 638 A1 and DE 195 41 726 A1 disclose a spindle unit for a lift and an elevator with a spindle lifting cable drive respectively.

WO2005/104127 discloses a lifting device in particular an elevator or lifting platform with a drive unit wherein the drive unit comprises at least two motors. Within this drive unit there is comprised a lubricating device which is controllable as a function of the operation of the lifting device. Said lubricating device supplies lubricant to lubricant points including a spindle. The lubricating device is controllable as a function of the operation of the lifting device, the lubrication points, e.g., a spindle can only be lubricated once the lifting device has been activated. Any movement of the lifting device in the starting phase takes place along non-lubricated surfaces. Movement along non-lubricated surfaces can cause damage to the internal surfaces of any lifting device and can result in increased maintenance costs.

There is thus a need to provide an improved lubrication of a spindle.

This object is solved by a lubrication device for an elevator spindle system according to claim 1; a method according to claim 8 and an elevator according to claim 10

The invention has at least the advantage that an elevator unit can be installed and lubricated simultaneously, wherein lubrication can occur before the elevator is in operation. The current options for lubricating a spindle system within an elevator require that the elevator first be installed, and then lubrication of the spindle can begin. This of course takes time and the available lubrication methods can be both labour- and equipment-intensive. The invention allows the user to install the elevator unit, wherein during installation and before operation, lubrication of the spindle can take place, thus allowing the installer to focus on other aspects of the installation. This also means that the elevator will move along a lubricated surface from the very beginning of its operating life

An **elevator unit** according to the invention comprises a spindle system; a lubrication device for an elevator spindle system and an elevator car. The **spindle system** is comprised of a spindle, wherein the spindle can have right-hand thread or left-hand thread; and an elevator car attachment mechanism, wherein the attachment mechanism comprises a nut.

The **lubrication device** for an **elevator spindle system** according to the invention comprises a dispenser, a collector, at least one lubricant container and at least one fluid conduct, wherein at least one fluid conduct comprises a valve.

The **dispenser** of the elevator spindle system lubrication device comprises a dispenser lubricant container; a dispensing section; and a support. The dispenser further comprises at least one opening, preferably, at least two openings, more preferably, at least three openings, wherein said opening(s) can be in the form of an inlet, outlet or both. At least one of the openings is an inlet, preferably at least two openings are inlets wherein said inlets are preferably positioned on the top of the dispenser. At least one opening is an outlet, preferably positioned at the bottom of the dispenser and comprises the dispensing section.

The **dispenser lubricant container** is positioned in the top part of the dispenser. This lubricant container comprises at least one opening and at least one channel. More preferably, it comprises at least two openings wherein at least one opening is situated at the top of the lubricant container, and at least one opening is positioned at the end of the at least one channel. Most preferably, this lubricant container comprises at least three openings wherein at least two openings are situated at the top of the lubricant container and at least one opening is positioned at the end of the at least one channel. It is most preferred that each opening of the dispenser lubricant container is placed directly in line with the corresponding openings of the dispenser. These at least two openings at the top of the lubricant container are adapted so that fluid can easily be transferred from an external source, e.g., a lubrication container, or a fluid conduct, or both, without spillage At least one of the at least two openings is adapted to connect to a further lubricant container, preferably a pre-lubricant container. At least one of the at least two openings is adapted to receive lubricant from a fluid conduct. As soon as lubricant enters the dispenser lubricant container, it travels along the at least one channel under gravity towards the dispensing section, before being released onto the spindle system. The at least one channel is formed when a spindle from a spindle system is inserted into the dispenser and dispenser lubricant container via at least one of their common openings. Preferably this opening is a top opening.

The **dispensing section** is located at the bottom of the dispenser and is adapted via its nose to control the flow of lubricant from the dispenser onto the spindle at a steady rate. A dispenser lubricant container at full capacity can lubricate a spindle at a rate of 1 m/hour to 2 m/hour, preferably at a rate of 1.5m/hour. This allows the user to know how many times the dispenser will need to be refilled should more than one lubrication step be required. This allows the user to better plan the installation of the elevator unit and also facilitates in reducing costs, as the user need only use the amount of lubricant that the spindle length requires. Therefore, the smaller the spindle, the less lubricant required.

Lubricants used in the lubrication device according to the invention can be any suitable lubricant for use in an elevator unit or any combination thereof.

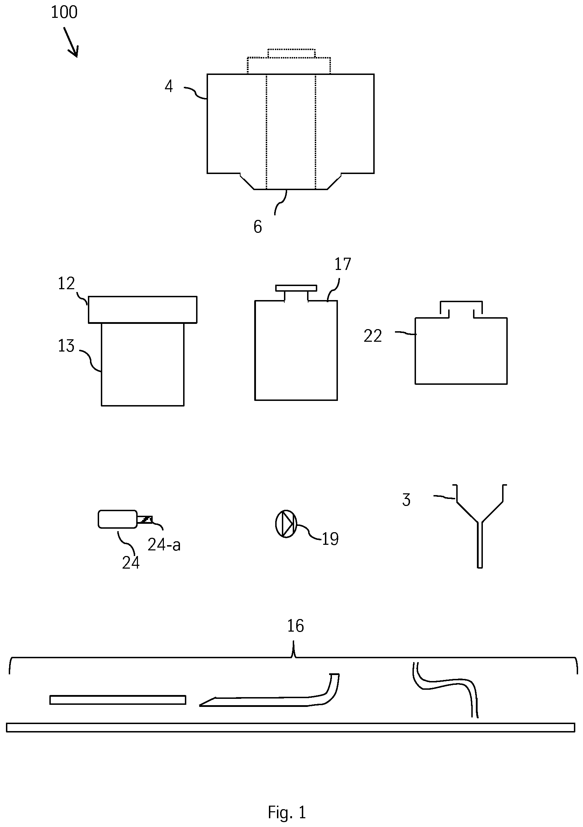

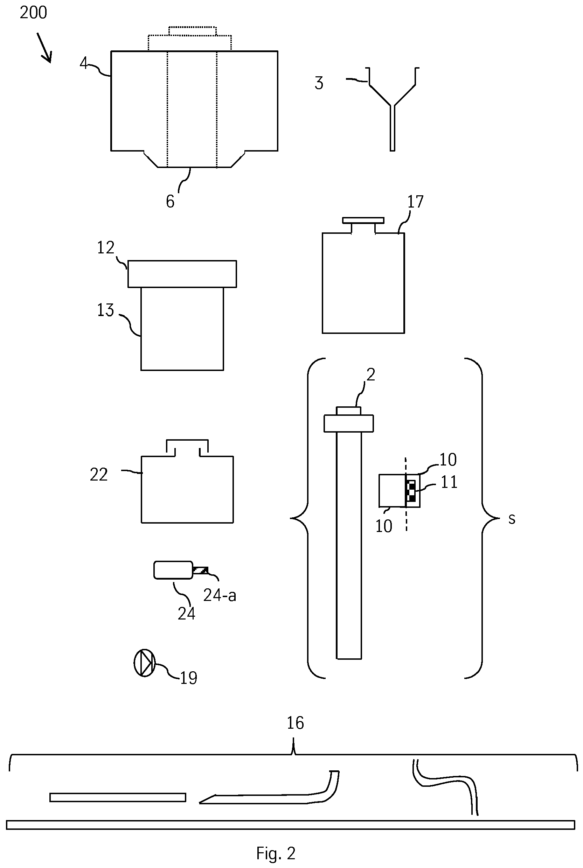

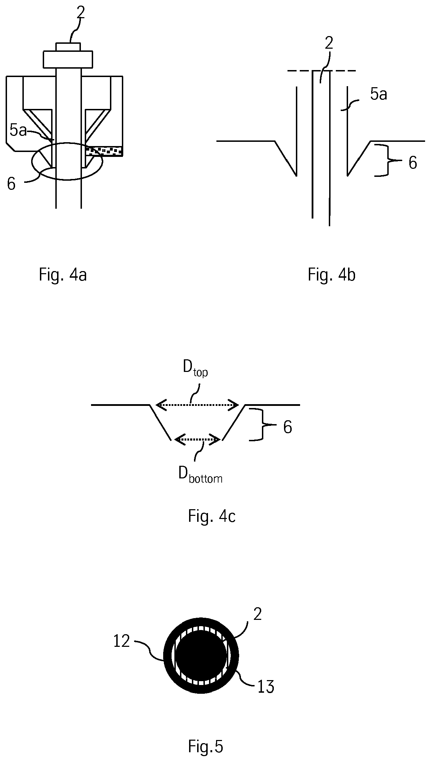

The lubricant reaches the dispensing section by travelling through the channel of the dispenser lubricant container. The nose of the dispensing section gradually becomes narrower towards the end of the dispenser body, as shown more clearly in figure 4c. The shape of the dispenser is not of specific importance. It is shown in figures 1 and 2 as having a cube/cuboidal cross-section. However, it can also be any other shape or form provided said shape/form can accommodate at least a dispenser lubricant container and a dispensing section, wherein the nose of the dispensing section has the required diameter for releasing lubricant at a steady rate onto a spindle system.

The **collector** of the elevator spindle system lubrication device comprises a collector and a collector tray. The shape of the collector tray is such that it can hold an amount of liquid without any of it spilling out into the surroundings. The collector tray can be a traditional tray, with a bottom and side walls encasing the bottom so to provide a trough-like container for lubricant. The bottom can also be bent or shaped so that it also acts as a side wall. The collector tray can be made from one piece of material combined with several others, or simply one piece of material shaped in such a way as to hold lubricant without spillage. The collector forms a complete diameter around the outer surface of the spindle, wherein said diameter is bigger than the diameter of the spindle. This allows the spindle to be partially inserted into the collector without touching it, and thus facilitates the collection of lubricant on the collector tray. This is more clearly shown in figure 5. In a preferred embodiment of the invention, the spindle is inserted into the collector so that as the lubricant collects on the collector tray, the end of the spindle is never submerged in the collected lubricant. Preferably, the spindle is not in physical contact with either the collector or the collector tray.

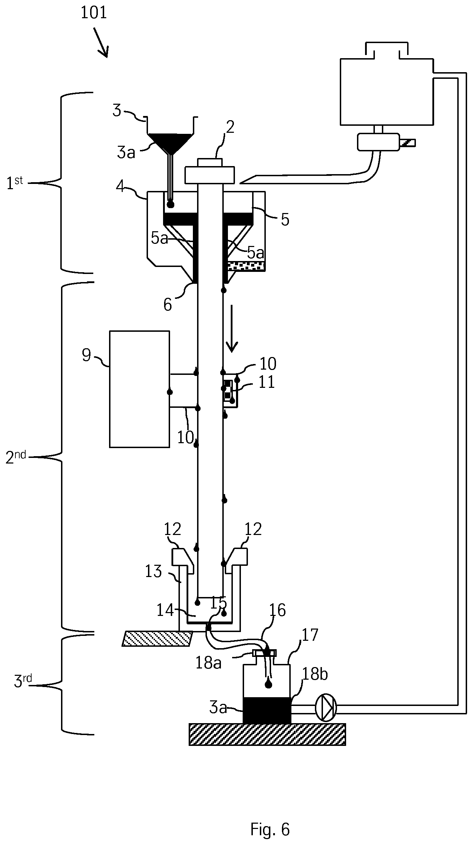

The **collector tray** comprises at least one outlet, wherein said outlet is preferably positioned on at least one surface of the collector tray. This surface can be a side wall, or on the bottom of the collector tray. The collector outlet allows the flow of collected lubricant from the collector tray to an external lubricant container, preferably, to the lower lubricant container (17). This flow of lubricant takes place via a conduct see figure 6.

The elevator spindle system lubrication device comprises at least one lubricant container, more preferably, it comprises at least two lubricant containers, most preferably, it comprises three lubricant containers. Each lubricant container is physically distinct from the other. These lubricant containers can be selected from the group consisting of a pre-lubricant container, a lower lubricant container, an upper lubricant container, or any combination thereof.

The **pre-lubricant container** is positioned above the dispenser. It is preferably connected with at least one of the top openings of the dispenser lubricant container The pre-lubricant container preferably comprises at least one opening, more preferably at least two openings. The first opening is preferably at the top and the second opening is preferably at the bottom. The top opening is preferably wider than the bottom opening. A most preferred geometry of this container is in the shape of a funnel since this allows for lubricant to be more easily inserted into the lubricant container at the wider top opening, and more easily directed into the opening of the dispenser lubricant container via the narrower opening at the bottom. The connection between the pre-lubricant container and the at least one top opening of the dispenser lubricant container is advantageous in that no gaps are involved, thus lubricant can transfer directly from the pre-lubricant container to the dispenser lubricant container without any spillage and/or impurities falling into said transferred lubricant. The pre-lubricant container is used to fill the dispenser lubricant container with lubricant. Once the latter container is filled, the pre-lubricant container can be either removed and the corresponding top opening of the dispenser lubricant container sealed, or it can remain in place. If the pre-lubricant container remains in place, it is preferable that a cover is put on top of it, in order to avoid impurities entering the lubricant and thus causing a contamination of the lubricated spindle system.

The **lower lubricant container** is positioned at the bottom of the spindle system, more preferably below the collector. The lower lubricant container comprises at least one opening, wherein said opening is adapted to attach to a fluid conduct. This opening can be in the form of an inlet or an outlet, or both. The at least one opening in the form of an inlet can be connected to the collector via a fluid conduct.

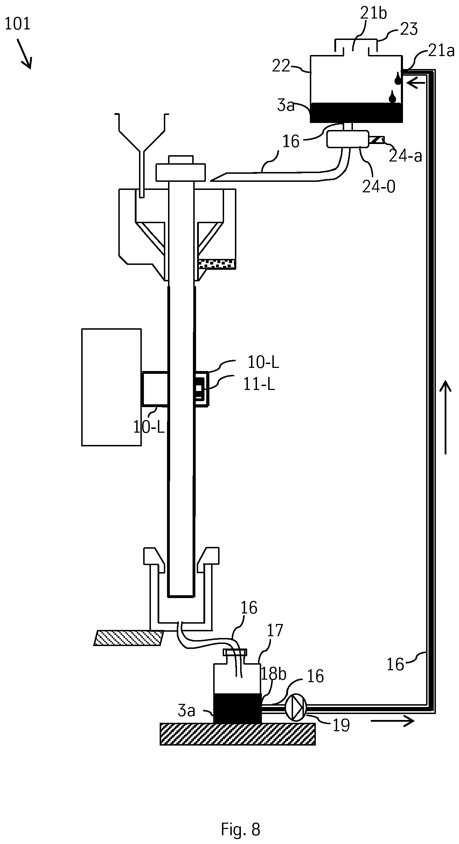

In a first embodiment of the invention, the at least one opening in the form of an outlet can be connected to a further lubricant container via a fluid conduct. Preferably the further lubricant container is an upper lubricant container. Within this fluid conduct, a pump can be comprised, wherein upon activation of said pump, lubricant is transported from the lower lubricant container to the upper lubricant container, see figure 8. The pump can be comprised within the fluid conduct or separate to it. If separate, the fluid conduct and pump are assembled together and then connected to the lower and upper lubricant container. This pump can be activated via an external control unit in order to transport lubricant from the lower lubricant container to the upper lubricant container. The external control unit can be any control unit which is capable of activating and controlling a pump.

In a second embodiment of the invention, the lubricant of the lower lubricant container remains the same as in the first embodiment however an outlet is sealed using any appropriate sealant, or cover. Lubricant is then transported to the upper lubricant container manually. The lower lubricant container is preferably portable.

The **upper lubricant container** is positioned above the dispenser. The upper lubricant container comprises at least one opening, wherein said at least one opening can be in the form of an outlet, an inlet, or both, wherein both are preferred. When both inlet and outlet are comprised within the upper lubricant container, it is preferred that the inlet and the outlet are not on the same side of the upper lubricant container. The at least one outlet is preferably positioned at the bottom of the lubricant container. The at least one inlet is preferably positioned on the top of the upper lubricant container or at the side, or both, wherein an inlet positioned at the top of the upper lubricant container is preferably sealed, e.g. using a lid or cover of other sort.

In a first embodiment of the invention, the upper lubricant container comprises at least one inlet and at least one outlet, preferably it comprises at least two inlets and at least one outlet. At least one inlet and/or outlet is connected to a fluid conduct. More preferably one inlet and one outlet are connected to a fluid conduct. It is most preferred that both inlet and outlet are connected to separate fluid conducts. The fluid conduct connected to outlet the upper lubricant container is preferably positioned above the dispenser, more preferably above a top opening of the dispenser and dispenser lubricant container. This avoids the spillage or leakage of lubricant during a transition phase, i.e., the movement of lubricant between component parts. This fluid conduct may or may not be in physical contact with the dispenser.

The fluid conduct connected to the outlet of the upper lubricant container comprises a valve. The valve may be any valve which can be in the open and closed position. Said position is operated via a valve control. When the valve is in the open position, lubricant is able to flow from the upper lubricant container and travel along the fluid conduct into the dispenser lubricant container. When the valve is in the closed position, no lubricant can flow through it and thus no lubricant reaches the dispenser lubricant container. The valve may be an electro-valve. When arranging the component parts, the valve may be separate from a fluid conduct and then assembled together with said conduct before the conduct assembly is attached to the upper lubricant container; or, the valve may be already comprised within a fluid conduct, in which case, the fluid conduct can be directly attached to the upper lubricant container.

In a second embodiment of the invention, the upper lubricant container is the same as the first embodiment, however at least one inlet is sealed using any appropriate sealant or cover.

The **elevator car attachment mechanism** connects the elevator car to the spindle. The attachment mechanism comprises a nut which rotates and moves along the outer surface of the spindle. In doing so, the elevator car moves also. As the nut rotates, it is preferred that the spindle remains fixed in place. The nut is capable of rotating when driven by a motor. This rotation causes the elevator car attachment mechanism to move along the outer surface of the spindle. When an elevator car is attached to said attachment mechanism, the elevator car moves in the same direction as that of the elevator car attachment mechanism. At least one of the spindle, nut and attachment mechanism are lubricated by the lubrication device according to claim 1, preferably at least two, preferably all three are lubricated by the lubrication device according to claim 1.

At least one **fluid** conduct is comprised within the lubrication device according to the invention, preferably at least two. A fluid conduct facilitates the transport of lubricant from:
- the collector tray to the lower lubricant container;
- the lower lubricant container to the upper lubricant container (first embodiment);
- the upper lubricant container to the dispenser.

A fluid conduct is made from any material which is suitable for the transportation of lubricant from one body to another. It is preferred that no impurities are present within or on said fluid conduct. It is further preferred that the material is inert to the lubricant travelling through it. Examples of fluid conducts are pipes or channels of any suitable material.

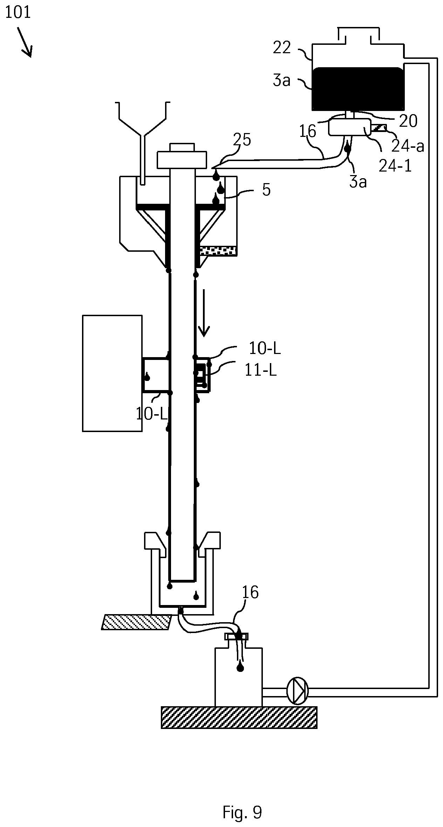

More than one transition phase occurs whilst carrying out the invention. A first transition phase is the transfer of lubricant from a pre-lubricant container into the dispenser lubricant container, which then travels through the at least one channel to the dispensing section (see figure 6, section 1). A second transition phase is the transfer of lubricant from the dispensing section of the dispenser, to the collector tray of the collector (see figure 6, section 2). This transition involves the lubrication of the spindle system. This transition phase can be repeated any number of times. A third transition phase is the transfer of lubricant from the collector tray of the collector to the lower lubricant container (see figure 6, section 3). The first three transition phases requires no input from a user, that is, the lubricant travels from the pre-lubricant container to the lower lubricant container under the force of gravity only. A fourth transition phase is the transfer of lubricant from the lower lubricant container to the upper lubricant container (see figure 8). A fifth transition phase is the transfer of lubricant from the upper lubricant container to the dispenser lubricant container (see figure 9). These two phases (fourth and fifth) are capable of being influenced by a user. Once the fifth phase has been completed, all phases can be repeated any number of times and the cycle of lubrication continues, preferably starting from the first or second phase, most preferably, starting from the second, thereby enabling a recycling of lubricant throughout the elevator spindle system of the elevator unit.

If necessary, lubricant can be added during any stage of the lubrication process and during any of the transition phases. It can be added to the dispenser lubricant container via the pre-lubricant container or to the upper lubricant container directly by opening the lid, it may even be added directly to the dispenser lubricant container, however, this would likely result in spillage. The choice of which container to add the lubricant can depend on the lubrication stage, as well as the preference of the user. For example, if the spindle has not yet been lubricated and a pre-lubrication step is taking place, then lubricant may be added to the pre-lubricant container. A pre-lubrication step can also be carried out by adding lubricant directly to the upper lubricant container and opening the valve in order to fill the dispenser lubricant container. Lubricant supplied to the pre-lubricant container can be used in a first pre-lubrication step or any pre-lubrication or lubrication step thereafter. Pre-lubrication of the spindle can comprise more than one pre-lubrication step.

If the spindle has been pre-lubricated and a further pre- or lubrication step is taking place, there is the option of adding extra lubricant to the upper lubricant container, or to the dispenser lubricant container directly. Extra lubricant may be added during lubrication via the pre-lubricant container, provided that the pre-lubricant container is still in place. If the pre-lubricant container is no longer in place, then it is preferred to add extra lubricant to the upper lubricant container rather than to the dispenser lubricant directly in order to avoid spillage or leakage of lubricant on or within the dispenser.

The parts as described above are equally applicable to all aspects of the invention, i.e., to the device according to claim 1, to the method according to claim 8, and to an elevator unit according to claim 10.

The invention also includes a kit wherein said kit comprises a lubrication device according to the invention and a spindle system. The kit can be assembled according to a first or second embodiment of the invention.

The method of lubricating a spindle system within an elevator unit according to the invention comprises the steps of:
i. providing a spindle system for attaching an elevator car and
ii. providing a lubrication device according to the invention for lubricating the spindle system;
iii. contacting the spindle system with a lubricant by allowing the lubricant to pass the dispenser and exit at a dispensing section of the dispenser.

The method can further comprise the steps of:
iv. transferring the collected lubricant from the lower lubricant container to the upper lubricant container;
v. controlling the flow of fluid to the dispenser at the controllable valve.

Once the lubricant is supplied to the dispenser lubricant container, the user need only wait for lubrication to occur. A pre-lubrication step can take place without any further actions to be carried out. If the user requires a further lubrication step, then they have two options:
A. if using an elevator unit according to the first embodiment of the invention; activate pump in order to transfer the collected lubricant in the lower lubricant container to the upper lubricant container;
B. if using an elevator unit according to the second embodiment of the invention; transfer the collected lubricant in the lower lubricant container to the upper lubricant container manually.

It is preferred that when lubricant is being provided to the upper lubricant container, the valve is closed. When lubricant is no longer being provided to the upper lubricant container, the valve may be opened. There exists also the option to have the valve open whilst lubricant is being provided to the upper lubricant container. However, this is at the discretion of the user. Opening the valve re-starts the lubrication process and recycling of the lubricant begins.

Preferred embodiments of the invention are detailed more clearly with the aid of reference numbers below:
|1| A lubrication device for an elevator spindle system having a spindle, comprising
   a) at least one lubricant container for storing a lubricant, wherein the lubricant container can be selected from the group consisting of a pre-lubricant container, a lower lubricant container an upper lubricant container, or any combination thereof;
   b) a dispenser to dispense the lubricant to the spindle system, wherein the dispenser comprises a dispenser lubricant container;
   c) a collector for collecting lubricant which has travelled from the dispenser along the spindle system, wherein the collector comprises a collector and a collector tray;
   (d) a fluid conduct adapted to transport the collected lubricant from the collector to the dispenser;
   **characterized in** that it further comprises
   a valve, wherein said valve is adapted to control the flow of lubricant from the upper lubricant container to the dispenser.
|2| The device according to embodiment |1|
   **characterized in that** the dispenser comprises a dispenser lubricant container and a dispensing section, wherein the dispenser is located at an upper section of the spindle, and
   wherein the dispensing section is adapted to release lubricant contained in the dispenser lubricant container.
|3| The device according to any of the preceding embodiments characterized in that the dispenser dispenses lubricant to the spindle (2) at a steady rate.
|4| The device according to any of the preceding embodiments
   **characterized in**
   **that** the collector comprises a collector tray, wherein the collector is located at a lower area of the spindle, and
   wherein the collector tray is adapted for collecting the lubricant from the spindle system. The collector tray is preferably connected to the lower lubricant container via a fluid conduct.
|5| The device according to any of the preceding embodiments **characterized in that** the dispensing section controls the release of lubricant from the dispenser (4).
|6| The device according to any of the preceding embodiments **characterized in that** the elevator spindle system (s) comprises a spindle (2), a nut (11) and an attachment mechanism (10),
   wherein the attachment mechanism (10) is adapted to attach an elevator car (9) to the spindle (2).
|7| The device according to any of the preceding embodiments **characterized in that** the nut (11) of the elevator spindle system is adapted to rotate on the spindle (2), wherein the rotation of the nut (11) is driven by a motor. The motor may be controlled by a control unit, wherein said control unit is comprised within or separate to the elevator unit comprising the elevator spindle system and the lubrication device according to the invention. The nut can rotate within the attachment mechanism before, during or after lubrication.
|8| The device according to any of the preceding embodiments
|9| , characterized in that the nut (11) is comprised within the attachment mechanism (10).
|10| The device according to any of the preceding embodiments **characterized in that** the spindle (2) is fixed.
|11| A kit of parts comprising;
   (i) a device according to any of the embodiments |1| to 191;
   (ii) a spindle system for attaching an elevator car;
   **characterized in that**
   the dispenser is fixed to the upper end of the spindle, and the collector is positioned at the lower end of the spindle such that the lower end of the spindle is at least partially accommodated within the collector. It is preferable that the end of the spindle makes no contact with the collector tray.
|12| A method of lubricating a spindle system within an elevator unit comprising the steps of:
   i. providing a device according to any of embodiments |1| to 191 and a spindle system for attaching an elevator car or a kit according to embodiment 1101;
   ii. providing a lubricant to the dispenser lubricant container via the pre-lubricant container or via the upper lubricant container, or both. If added via the upper lubrication container, the valve must be in the open position;
   iii. contacting the spindle system with lubricant by allowing the lubricant to pass the dispenser under the influence of gravity and exit at the dispensing section of the dispenser.
|13| The method can further comprises the steps of:
   iv. transferring the collected lubricant from the lower lubricant container to the upper lubricant container;
   v. controlling the flow of fluid from the upper lubricant container to the dispenser at the controllable valve.
   vi. optionally repeating steps iv to v according to desired level of lubrication.
|14| The method according to any of embodiments 1111-1121 wherein a pre-determined amount of lubricant is provided to the dispenser lubricant container to lubricate the spindle system. It is preferred that the amount of lubricant is related to the length of the spindle within the spindle system. If more than one lubrication cycle is desired, a further amount of lubricant is provided to the dispenser lubricant container. This can be repeated as often as desired.
|15| |An elevator comprising a lubrication device according to any of embodiments 111-191 or a kit according to embodiment |10|.
|16| Use of a device according to any of embodiments 111-191 in an elevator spindle system.
|17| Use of a method according to any of embodiments |11|-|13| for lubricating an elevator spindle system.

The invention is described in more detail with the help of the figures wherein it is shown schematically:
figure 1 a lubrication device 100 according to the invention in disassembled form;
figure 2 a kit of parts 200 according the invention in disassembled form;
figure 3 an elevator unit according to a first embodiment of the invention 101 in cross-sectional side view;
figures 4a-4c a close-up view of the dispensing section 6b of the dispenser 4;
figure 5 a top cross-sectional view of the line A-A of figure 3 showing the spindle 2 comprised within the collector 12;
figure 6 a first, second and third transition phase according to a first embodiment of the invention 101;
figure 7 a pre-lubricated spindle system according to a first embodiment of the invention 101;
figure 8 a fourth transition phase according to a first embodiment of the invention 101;
figure 9 a fifth transition phase according to a first embodiment of the invention 101;
figure 10 an elevator unit according to a second embodiment of the invention 102 in cross-sectional side view.

Figure 1 shows a lubrication device 100 for an elevator spindle system according to the invention in non-assembled form. The lubrication device 100 comprises:
- a dispenser 4, wherein the dispenser 4 comprises a dispenser lubricant container 5;
- a collector 12, wherein the collector 12 comprises a collector tray 13;
- a first lubricant container 3, hereinafter referred to as a pre-lubricant container 3;
- a second lubricant container 17, hereinafter referred to as a lower lubricant container 17;
- a third lubricant container 22, hereinafter referred to as an upper lubricant container 22;
- fluid conducts 16 in different embodiments,
wherein at least one fluid conduct 16 comprises a valve 24 with a valve control 24-a and wherein at least one fluid conduct 16 comprises a pump mechanism 19.
The lubrication device according to a first embodiment of the invention comprises a pump mechanism 19. The lubrication device according to a second embodiment of the invention does not comprise a pump mechanism 19. The dotted lines within the dispenser 4 represent where a spindle 2 would be placed within the dispenser unit.
The valve 24 is comprised within fluid conduct 16 and connected to the upper lubricant as one part. It may also be connected to the upper lubricant container in stages, wherein a first fluid conduct 16 is attached to the upper lubricant container 22, the valve 24 is then attached to the exposed end of the fluid conduct and then a further fluid conduct 16 is connected at the other side of the valve 24 so that the opening of the further fluid conduct 16 is positioned above the dispenser 4.

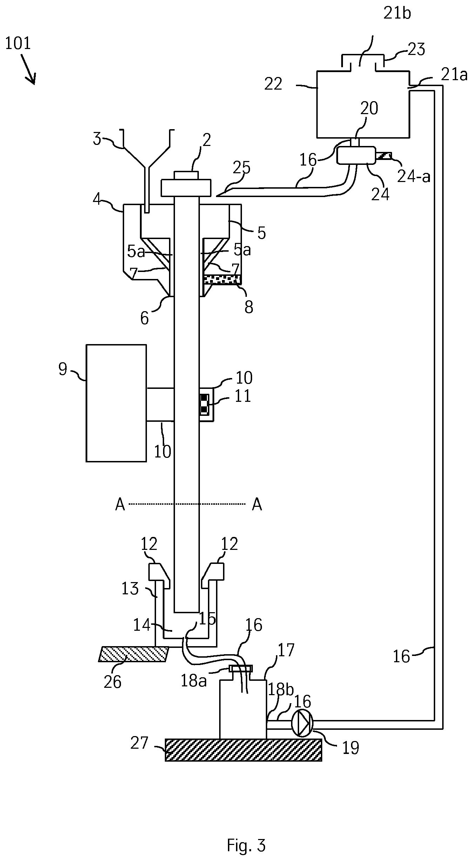

Figure 2 shows a kit 200 according to the invention in non-assembled form. The kit comprises the lubrication device as shown in figure 1 as well as a spindle system s, wherein the spindle system comprises a spindle 2, an attachment mechanism 10 and a nut 11, wherein the nut 11 is comprised within the attachment mechanism 10. The dashed line within the attachment mechanism 10 represents the point of attachment of an elevator car 9 (see figure 3, not shown in figure 2). The attachment mechanism 10 is thus capable of being split into at least two parts. A lubrication device according to a first 101 or second 102 embodiment (see subsequent figures) of the invention can be assembled using this kit.
Fig. 3 shows a vertical cross-sectional side view of the set-up of an assembled elevator unit 101. The elevator unit comprises
- an elevator car 9 for transporting people/goods,
- a spindle system s (as shown in figure 2) having a spindle 2 for driving the elevator car 9, and
- a lubrication device as shown in the figures 1 and 2 according to the invention for lubricating the spindle system.

This lubrication device provides a lubricant 3a to the spindle system s and can do so before and/or during and/or after operation of the elevator unit. The lubrication device 101 ensures that the spindle system remains sufficiently lubricated at all times, especially during operation

The spindle system s comprises:
- a spindle 2,
- a nut 11 and
- an attachment mechanism 10, comprising nut 11.

The spindle 2 is mounted in a fixed position and does not rotate during operation of the elevator unit. The elevator car 9 is attached to the spindle 2 via the attachment mechanism 10. When the elevator car 9 is in operation, the nut 11 rotates along the outer surface of the spindle 2, thus moving the elevator car 9. For rotating the nut a drive motor is used (not shown). The operation of the motor and consequently the rotation of the nut is controlled by a control unit (not shown). This control unit may be comprised within the attachment mechanism 10, or external to it. The control unit for the spindle system, can also be configured to control the valve control 24-a and/or the pump 19. The control unit may be positioned at anywhere within the elevator unit.

The lubrication device according to the first embodiment of the invention is assembled in the following way: the spindle 2 of the spindle system s is inserted into the dispenser 4 with the attachment mechanism 10 and the nut 11 added to the spindle 2 below the dispenser 4; the elevator car 9 is attached to the attachment mechanism 10; the collector 12, comprising the collector tray 13 is positioned near the lower end of the spindle 2; the lower lubricant container 17 is positioned below the collector 12 and collector tray 13, wherein one of the fluid conducts 16 connects the container 17 and the collector tray 13 at points 15 and 18a; an outlet 18b of the lower lubricant container 17 is connected at to an inlet 21a of the upper lubricant container 22 via fluid conduct 16, wherein a pump 19 is provided for pumping lubricant from the lower lubricant container 17 to the upper lubricant container 22. The upper lubricant container 22 is positioned above the dispenser 4; an outlet 20 of the upper lubricant container 22 is connected to a fluid conduct 16, wherein in this this fluid conduct 16 the valve 24 with the valve control 24-a is provided. This valve 24 is adapted to control the flow of lubricant from lubricant container 22 to the dispenser 4. At its downstream side the fluid conduct 16, attached at the outlet 20 of the upper lubricant container 22, has an open end 25. The open end 25 of fluid conduct 16, i.e., the end which is not attached to the upper lubricant container 22 at outlet 20, is positioned directly above the dispenser 4 and the dispenser lubricant container 5, so when valve 24 is open, lubricant from the upper lubricant container 22 flows directly into the dispenser lubricant container 5 of the dispenser 4. In another embodiment the open end 25 can be attached to the dispenser 4 at the dispenser lubricant container 5.

The dispenser 4 dispenses lubricant to the spindle system s via the dispensing section 6.The dispenser 4 is positioned at upper area of the spindle 2, and is supported via supports 7, 8.The dispenser 4 comprises a dispenser lubricant container 5 which is situated at the very top of the dispenser 4. Lubricant is added into the lubricant container 5. Lubricant can be added to the dispenser via a pre-lubricant container 3 and/or via a fluid conduct 16 connected to the upper container 22. Lubricant can be added via a fluid conduct 16 only if there is lubricant present in the upper lubricant container 22. The dispenser 4 dispenses lubricant to the spindle 2 at the dispensing section 6 under the force of gravity, i.e., the lubricant is not pumped or otherwise forcibly moved through the dispensing section 6. The lubricant travels from the dispenser lubricant container 5 to the dispensing section 6 via channels 5a. These channels are formed upon introduction of the spindle 2 to the dispenser 4, in particular, when the spindle is inserted into the dispenser lubricant container 5. The channels 5a represent the area of unoccupied space between the outer surface of the spindle and the inner surface of the dispenser lubricant container 5. Once lubricant enters the dispenser, it travels through this area of unoccupied space (channels 5a) towards the dispensing section 6.

The collector 12 of the lubrication device according to the invention is adapted to collect the dispensed lubricant at the lower area of the spindle 2. The collector 12 comprises a collector tray 13 and is positioned near the lower area of the spindle 2 so that the lower area of the spindle 2 is at least partially accommodated within the collector 12. Once dispensed, the lubricant travels along the spindle 2 and is directed via the collector 12 to the lower end of the spindle 2, at which point, the lubricant drips off and contacts the collector tray 13. By the time the lubricant reaches the collector, it has travelled along the spindle 2 as well as the attachment mechanism 10 and the nut 11, thereby leaving a lubricated spindle system s. The collector 12, which is preferably funnel-shaped, sits on top of the collector tray 13. The collector tray 13 comprises an outlet 15. The collector 12 and tray 13 sit upon a first surface 26 of a housing or a frame. The collector tray 13 is connected to a lower lubricant container 17 (which sits upon a second surface 27 of a separate or same housing or a frame), via fluid conduct 16. The fluid conduct 16 is connected to an outlet 15 of the collector tray 13 and an inlet 18a of the lower lubricant container 17. The collector tray 13 is thus adapted to facilitate the transport of the dispensed lubricant which has travelled along the spindle 2 to the lower lubricant container 17.

Figs. 4a-4c shows the dispensing section 6 in more detail. Figure 4a shows the spindle/dispenser set up according to the invention and highlights the area of the dispensing section 6. Figure 4b shows the position of the spindle 2 within the channels 5a. These channels are partially comprised within the nose of the dispensing section 6, i.e., within the narrowed area at the bottom of the dispenser. Figure 4c shows the variation in diameter between the diameter of the nose at the top of the dispensing section (Dₜₒₚ) and the diameter of the nose at the bottom (D_{bottom}).

Fig. 5 shows a top cross-sectional view along line A-A as shown in figure 3.

Fig. 6 shows an example of a first, second and third transition phase according to the first and second embodiments 101, 201 of the invention respectively. The lubricant 3a moves from a pre-lubricant container 3 into the dispenser lubricant container 5 (first transition phase); the lubricant 3a moves through the channels 5a of the dispenser lubricant container 5 and reaches the dispensing section 6 where the lubricant 3a exits the dispenser 4 in drop form; the lubricant travels along and simultaneously lubricates the spindle system s, i.e. spindle 2, attachment mechanism 10, nut 11; upon reaching the end of the spindle 2, the lubricant 3a passes through the collector 12; the lubricant 3a then drips off the lower end of the spindle 2, onto the collector tray 13 (second transition phase). This can be used as a pre-lubrication step of the spindle system. More than one pre-lubrication step can be carried out. At this stage, the third transition phase begins; the transfer of the collected lubricant 3a in the collector tray 13 into the lower lubricant container 17 via a fluid conduct 16 connected at outlet 15 and inlet 18a. No external forces or extra equipment is needed to facilitate this lubricant transfer.

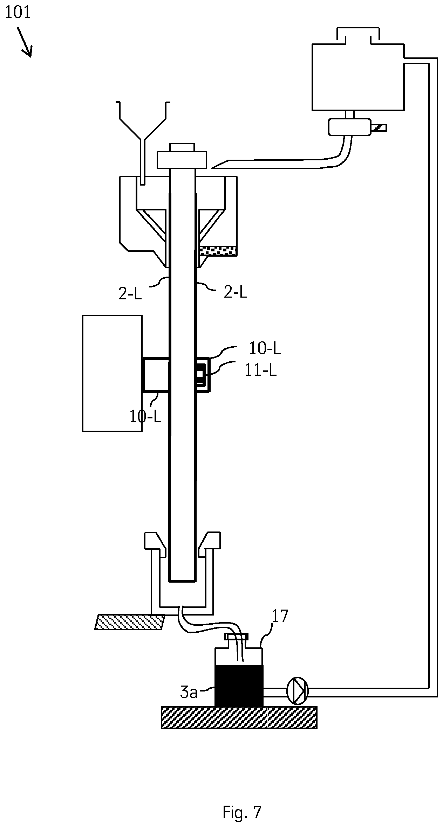

Fig. 7 shows an example of a lubricated spindle system and lubrication device according to the first and second embodiments 101, 102 of the invention respectively. The darker lines shown by reference numbers 2-L, 10-L and 11-L represent the lubricated areas. The third transition phase is complete; the lubricant 3a is comprised within the lower lubricant container 17 where it is still to be transferred to the upper lubricant container 22 (fourth transition phase).

Fig.8 shows the fourth transition phase according to the first embodiment 101of the invention. In the first embodiment lubricant 3a is transferred to the upper lubrication container 22 via activation of pump 19. The collected lubricant 3a leaves the lower lubricant container 17 via outlet 18b and travels through fluid conduct 16 until it arrives at inlet 21a of the upper lubricant container 22 and starts to fill the lubricant container 22. The arrows show the direction of lubricant travel. The valve 24 is closed, so that all the lubricant can first collect in the container 22 before the fifth transition phase begins.

Fig. 9 shows a fifth transition phase according to the first and second embodiment 101, 102 of the invention respectively. The lubricant 3a contained in the upper lubricant container 22 enters fluid conduct 16 when the valve 24 is set to the open position 24-1. Once opened, the lubricant 3a travels along 16 until it reaches opening 25. Opening 25 is positioned directly above a top opening of the dispenser 4 and dispenser lubricant container 5. Lubricant 3a drops from 26 into container 5 and the second transition phase begins again.

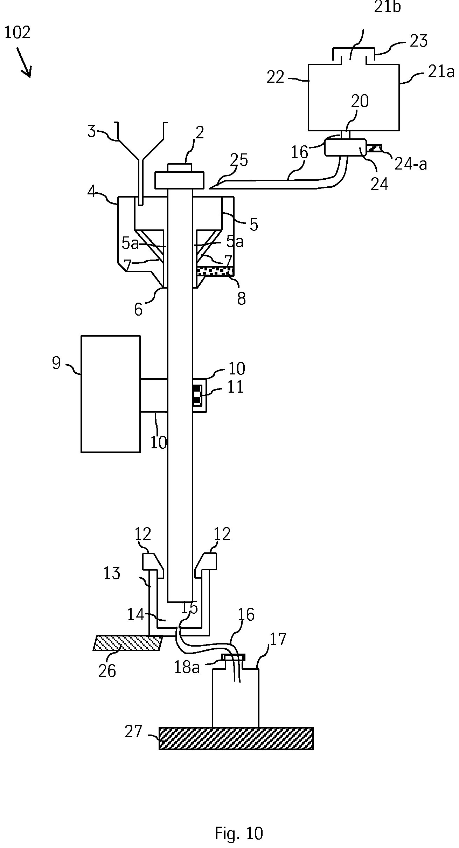

Fig. 10 shows a vertical cross-sectional side view of the set-up of an elevator unit according to a second embodiment of the invention 102. This set-up is the same as the elevator unit described in figure 3 in all parts except that pump 19 and fluid conduct 16 are missing. The lower lubricant container 17 remains the same; however, outlet 18b is sealed (not shown in the corresponding figure). The upper lubricant container remains the same; however inlet 21a is sealed (not shown in the corresponding figure). Said openings (inlet 21a and outlet 18b) can be sealed using any appropriate sealant, or cover.

In the second embodiment in order for the collected lubricant 3a to be transported from the lower lubricant container 17 to the upper lubricant container 22, the fluid conduct 16 is removed from inlet 18a, the lower lubricant container 17 is moved manually up to the upper lubricant container 22 and lubricant 3a is poured into the upper lubricant container 22. At this time, the valve 24 is in the closed position until all lubricant has been transferred. Once all lubricant is added, the valve 24 can be switched to the open position, so that lubricant flows from the upper lubricant container into the dispenser lubricant container 5 of the dispenser 4.

### Reference signs list

- 100: lubricating device
- 200: a kit
- 101: an elevator unit according to a first embodiment of the invention
- 201: an elevator unit according to a second embodiment of the invention
- 2: spindle
- 2-L: lubricated surface area of spindle 2
- 3: pre-lubricant container
- 3a: lubricant
- 4: dispenser
- 5: dispenser lubricant container
- 5a: channels
- 6: dispensing section
- 7, 8: support 9 elevator car
- 10: attachment mechanism
- 10-L: lubricated surface area of attachment mechanism 10
- 11: nut
- 11-L: lubricated surface area of nut 11
- 12: collector
- 13: collector tray
- 14: internal volume of collector tray 13
- 15: collector tray outlet
- 16: fluid conduct
- 17: lower lubricant container
- 18a: inlet of lower lubricant container 17
- 18b: outlet of lower lubricant container 17
- 19: pump
- 20: upper lubricant container outlet
- 21a,: 21b upper lubricant container inlet
- 22: upper lubricant container
- 23: lid
- 24: valve
- 24-a: valve control
- 25: opening of fluid conduct
- 26, 27: surface

## Claims

1. A lubrication device (100) for an elevator spindle system (s) having a spindle (2), comprising
a) at least one lubricant container (3, 5, 17, 22) for storing a lubricant (3a);
b) a dispenser (4) to dispense the lubricant (3a) to the spindle system (s);
c) a collector (12) for collecting lubricant which has travelled from the dispenser (4) along the spindle system(s);
(d) a fluid conduct (16) adapted to transport the collected lubricant (3a) from the collector (12) to the dispenser (4);
**characterized in that** it further comprises
(e) a valve (24), wherein said valve (24) is adapted to control the flow of lubricant (3a) from at least one lubricant container (3, 5, 17, 22) to the dispenser (4).

2. The device according to claim 1
**characterized in**
**that** the dispenser (4) comprises a dispenser lubricant container (5) and a dispensing section (6), wherein the dispenser is located at an upper section of the spindle (2), and wherein the dispensing section (6) is adapted to release lubricant (3a) contained in the dispenser lubricant container (5).

3. The device according to any of the preceding claims **characterized in that** the dispenser dispenses lubricant to the spindle (2) at a steady rate.

4. The device according to any of the preceding claims
**characterized in**
**that** the collector (12) comprises a collector tray (13), wherein the collector is located at a lower area of the spindle (2), and
wherein the collector tray is adapted for collecting the lubricant from the spindle system.

5. The device according to any of the preceding claims **characterized in that** the dispensing section (6) controls the release of lubricant (3a) from the dispenser (4).

6. The device according to any of the preceding claims **characterized in that** the elevator spindle system (s) comprises a spindle (2), a nut (11) and an attachment mechanism (10), wherein the attachment mechanism (10) is adapted to attach an elevator car (9) to the spindle (2).

7. The device according to any of the preceding claims **characterized in that** the nut (11) of the elevator spindle system is adapted to rotate on the spindle (2), wherein the rotation of the nut (11) is driven by a motor.

8. A method of lubricating an elevator spindle system (s) comprising the steps of:
i. providing a spindle system (s) for attaching an elevator car (9); and
ii. providing a lubrication device (100) according to any of claims 1 to 7 for lubricating the spindle system (s);
iii. contacting the spindle system with lubricant (3a) by allowing the lubricant (3a) to pass the dispenser (4) and exit at a dispensing section (6) of the dispenser.

9. The method according to claim 8 further comprising the steps:
iv. transferring the collected lubricant (3a) from lubricant container (17) to lubricant container (22);
v. controlling the flow of fluid to the dispenser at the controllable valve (24).

10. An elevator comprising a device according to any of claims 1 to 7.
